# FASCICULE DE BREVET EUROPEEN

(11) **EP 4 568 613 B1**
(45) Date de publication et mention de la délivrance du brevet: **20.05.2026**
(21) Numéro de dépôt: 23790238.2
(22) Date de dépôt: 09.08.2023
(51) Int. Cl.: A61C 7/08, A61C 7/00

(54) **PROCÉDÉ DE FABRICATION D'UNE GOUTTIÈRE ORTHODONTIQUE**
HERSTELLUNGSVERFAHREN EINER ZAHNSCHIENE
METHOD FOR FABRICATING AN ALIGNER

(30) Priorité: 09.08.2022 FR 2208201
(43) Date de publication de la demande: 18.06.2025
(73) Titulaire: Bergeyron, Patrice, 1246 Corsier (CH)
(72) Inventeur: Bergeyron, Patrice, 1246 Corsier (CH)
(74) Mandataire: Ipsilon
(86) Numéro de dépôt international: PCT/EP2023/072012
(87) Numéro de publication internationale: WO 2024/033401

(56) Documents cités:
- EP-A1- 3 442 461
- US-A1- 2003 190 576
- US-A1- 2007 065 768
- US-A1- 2010 183 997
- US-A1- 2013 095 446
- US-A1- 2018 071 054

## Description

### Domaine technique

La présente invention concerne un procédé de fabrication d'une gouttière orthodontique et un dispositif comportant une telle gouttière orthodontique et un appareil orthodontique complémentaire.

### Technique antérieure

Pour corriger une malocclusion ou pour modifier l'apparence d'un utilisateur en particulier, il est souhaitable de modifier la position d'une ou plusieurs dents d'un utilisateur.

Parmi les appareils orthodontiques utilisés à cet effet, on distingue en particulier les appareils orthodontiques à arc et attaches d'une part, et les gouttières orthodontiques d'autre part.

Un appareil orthodontique à arc et attaches comporte des attaches, ou *« brackets »,* fixées sur les dents et reliées entre elles au moyen d'un arc, classiquement en un matériau à mémoire de forme. Il exerce une action rapide sur le déplacement des dents du patient traité. Cependant, cette action décroît progressivement et il est nécessaire que le patient prenne régulièrement rendez-vous chez l'orthodontiste afin de modifier le réglage de l'arc ou le changer. Par ailleurs, un appareil orthodontique à arc et attaches est souvent inesthétique. Enfin, il définit des recoins dans lesquels la nourriture peut s'accumuler, même quand l'utilisateur se brosse régulièrement les dents.

Une gouttière orthodontique, « *aligner* » en anglais, se présente classiquement sous la forme d'un appareil monobloc amovible, classiquement en un matériau polymère transparent. Elle comporte une goulotte de forme générale en « U » conformée pour recevoir plusieurs dents d'une arcade, généralement toutes les dents d'une arcade. La forme de la goulotte est adaptée pour, dans la position de service, maintenir en position la gouttière orthodontique sur les dents, tout en exerçant une contrainte sur les dents, par exemple pour en modifier l'agencement. Classiquement, une série de gouttières orthodontiques est fabriquée et remise à l'utilisateur, pour qu'il les porte successivement. Avantageusement, la gouttière orthodontique peut être remplacée par l'utilisateur lui-même. En outre, les gouttières sont plus discrètes que les appareils à arc et attaches. Elles peuvent être facilement nettoyées ou remplacées. L'action d'une gouttière orthodontique est cependant lente, de sorte que le traitement orthodontique peut durer plusieurs mois. Enfin, certains mouvements de dents ne peuvent être obtenus exclusivement avec des gouttières orthodontiques, les gouttières orthodontiques pouvant glisser sur les dents (« effet savon »).

EP 3 442 461 A1 divulgue un procédé de fabrication d'au moins une gouttière orthodontique, utile à la compréhension de la présente invention.

US 2010/183997 A1 divulgue une gouttière orthodontique utile à la compréhension de la présente invention.

Il existe un besoin permanent pour un procédé de fabrication d'une gouttière orthodontique qui réponde, au moins en partie, aux problèmes exposés ci-dessus.

Un but de l'invention est de répondre, au moins partiellement, à ce besoin.

### Exposé de l'invention

### Résumé de l'invention

L'invention fournit un procédé de fabrication d'au moins une gouttière orthodontique, aussi désignée ci-après par « nouvelle gouttière orthodontique », destinée à être portée, dans une position de service, par une arcade dentaire d'un utilisateur, dite « arcade de support », ladite gouttière orthodontique étant conformée pour définir, dans ladite position de service, avec l'arcade de support, une cavité, de préférence une cavité présentant un volume supérieur à 5 mm³, de préférence supérieur à 80 mm³.

Le procédé comporte de préférence les étapes suivantes :
a) génération d'un modèle tridimensionnel numérique de l'arcade de support ;
b) à partir du modèle de l'arcade de support, génération d'un modèle tridimensionnel numérique de la gouttière orthodontique conformé de manière que ladite gouttière orthodontique puisse être fixée, de manière amovible, sur l'arcade de support, dans une position de service, et que, dans ladite position de service, ladite gouttière orthodontique définisse avec l'arcade de support, une cavité présentant un volume de préférence supérieur à 5 mm³, de préférence supérieur à 80 mm³ ;
c) fabrication de ladite gouttière orthodontique à partir du modèle de la gouttière orthodontique.

Selon l'invention, la cavité comporte un espace libre occlusal s'étendant entre la surface intérieure occlusale de la gouttière orthodontique et la surface occlusale de l'arcade de support,
l'espace libre occlusal
- s'étendant sur une longueur L supérieure à la longueur de plus d'une dent de l'arcade de support, lesdites longueurs étant mesurées suivant l'axe longitudinal X de la gouttière orthodontique, et présentant une hauteur supérieure à 1 mm, et/ou
- étant conformé pour loger un appareil auxiliaire comportant de préférence un organe reliant une première surface d'une première dent à une deuxième surface d'une deuxième dent, lesdites première et deuxième surfaces appartenant à la surface de l'arcade de support définissant la cavité, une seule des première et deuxième dent étant de préférence entièrement logée dans la cavité, le procédé comportant, avant l'étape b), la détermination de l'appareil auxiliaire.

Une dent de l'arcade de support entièrement logée dans la cavité ou susceptible de faire éruption dans la cavité de manière à y être entièrement logée est appelée « dent libre ».

La région de ladite gouttière orthodontique définissant ladite cavité est appelée « région cavitaire ». Pour évaluer si la longueur de l'espace libre occlusal est supérieure « à la longueur de plus d'une dent de l'arcade de support », on considère bien entendu les dents de l'arcade de support qui s'étendent face au dit espace libre occlusal. La région cavitaire couvre donc plus d'une dent, et en particulier deux ou trois ou quatre dents libres. Elle peut aussi couvrir une, deux, trois ou quatre dents libres et une partie seulement d'une autre dent, dite « dent enveloppée ».

Ladite hauteur peut être en particulier
- une hauteur locale, mesurée en un point de la surface occlusale de l'arcade de support qui définit la cavité,
- une hauteur moyenne, en moyenne arithmétique sur la surface occlusale de l'arcade de support qui définit la cavité,
- une hauteur maximale, en considérant l'ensemble des points de la surface occlusale de l'arcade de support qui définit la cavité,
- une hauteur minimale, en considérant l'ensemble des points de la surface occlusale de l'arcade de support qui définit la cavité.

Comme on le verra plus en détail dans la suite de la description, la cavité peut être conformée pour autoriser et protéger une évolution naturelle d'une dent libre, et en particulier son éruption, pendant une longue durée.

La cavité peut être ainsi conformée pour réserver un espace de dérive, ou « leeway », afin qu'au moins une dent libre puisse y faire convenablement éruption. La gouttière orthodontique est alors conformée pour présenter une rigidité suffisante pour empêcher les dents adjacentes à la cavité de venir l'encombrer. La gouttière orthodontique est de préférence conformée de manière à guider l'éruption d'au moins une dent libre.

La cavité peut être conformée pour constituer un espace technique, alternativement ou en complément à un espace de dérive. La cavité est de préférence adaptée pour recevoir au moins une partie, de préférence la totalité d'un appareil orthodontique rigidement fixé, de manière non amovible, sur au moins une dent libre, ou « appareil auxiliaire », l'appareil auxiliaire étant choisi au début du procédé.

L'appareil auxiliaire comporte de préférence au moins un crochet.

L'appareil auxiliaire peut être en particulier utilisé pour mettre en rotation une dent.

L'appareil auxiliaire peut être avantageusement adapté pour exercer une action locale beaucoup plus forte qu'une gouttière orthodontique conventionnelle. Il permet ainsi une correction efficace de la position d'une dent. Cette action peut être avantageusement complexe, et en particulier inclure une rotation d'une dent sur elle-même.

L'appareil auxiliaire comporte de préférence un premier crochet rigidement fixé sur la première dent, un deuxième crochet fixé rigidement sur ladite dent libre, et l'organe reliant physiquement le premier crochet au deuxième crochet, de préférence pour exercer une tension entre lesdits premier et deuxième crochets, de préférence pour faire tourner la dent libre de plus de 20°.

L'appareil auxiliaire peut être un fil collé sur les première et deuxième surfaces.

L'organe est de préférence tendu pour exercer une force de rapprochement entre les première et deuxième dents.

De préférence, l'espace technique est dimensionné pour que ledit appareil auxiliaire puisse fonctionner sans être en contact avec la gouttière orthodontique ou sans qu'un tel contact n'interagisse sensiblement avec ledit fonctionnement.

De préférence, la gouttière orthodontique n'est pas en contact avec l'appareil auxiliaire ou la partie de l'appareil auxiliaire logé dans la cavité.

Dans un mode de réalisation, la cavité constitue un espace de rotation pour au moins une dent libre susceptible d'y tourner de plus de 10°, de préférence de plus de 20°, de préférence de plus de 30° dans la position de service, de préférence un espace dimensionné pour que ladite dent libre puisse effectuer ladite rotation sans être en contact avec la gouttière orthodontique ou sans qu'un tel contact n'interagisse sensiblement avec ladite rotation.

La gouttière orthodontique protège les dents libres et/ou l'appareil auxiliaire disposés dans la cavité, en particulier des chocs. Elle peut les isoler de l'environnement.

Dans un mode de réalisation, la gouttière orthodontique est conformée pour maintenir en position ou déplacer des dents vers une position cible, comme les gouttières orthodontiques conventionnelles. Dans un mode de réalisation, aucune desdites dents ne fait éruption dans la cavité.

Dans un mode de réalisation, le procédé comporte, après la fabrication de la gouttière orthodontique, la remise de ladite gouttière orthodontique à un utilisateur, et optionnellement le positionnement de la gouttière orthodontique dans la position de service.

Dans un mode de réalisation, à l'étape a) on génère également un modèle d'un appareil auxiliaire et, à l'étape b), on positionne le modèle de l'appareil auxiliaire sur le modèle de l'arcade de support et on génère le modèle de la gouttière orthodontique de manière que, dans la position de service, l'appareil auxiliaire soit en partie ou de préférence complètement dans la cavité définie par la gouttière orthodontique.

Le modèle de l'appareil auxiliaire est positionné sur le modèle de l'arcade de support comme l'appareil auxiliaire doit être positionné sur l'arcade de support dans la position de service.

Le modèle de l'arcade de support sur lequel le modèle de l'appareil auxiliaire a été positionné représente la surface sur laquelle la gouttière orthodontique doit être positionnée dans la position de service. Cette surface peut être localement déformée pour définir la cavité. Elle peut être aussi utilisée pour définir le reste de la surface intérieure de la gouttière orthodontique, notamment en vue de sa fixation sur les dents.

Dans un mode de réalisation, l'invention concerne un procédé de fabrication d'au moins une gouttière orthodontique destinée à être portée, dans une position de service, par une arcade dentaire d'un utilisateur, dite « arcade de support », l'arcade de support
- comportant une première dent et une deuxième dent et
- portant ou étant destinée à porter un appareil auxiliaire comportant un organe reliant une première surface de la première dent à une deuxième surface de la deuxième dent,
le procédé comportant les étapes suivantes :
a) génération d'un modèle tridimensionnel numérique de l'arcade de support ;
b) à partir du modèle tridimensionnel numérique de l'arcade de support, génération d'un modèle tridimensionnel numérique de la gouttière orthodontique conformé de manière que
   - ladite gouttière orthodontique puisse être fixée, de manière amovible, sur l'arcade de support, dans une position de service,
   - ladite gouttière orthodontique définisse, dans la position de service, avec l'arcade de support, une cavité conformée pour loger l'appareil auxiliaire, lesdites première et deuxième surfaces appartenant à la surface de l'arcade de support définissant, avec ladite gouttière orthodontique, ladite cavité,
   seule la première dent, parmi les première et deuxième dents, étant entièrement logée dans la cavité, et
c) fabrication de ladite gouttière orthodontique à partir du modèle de la gouttière orthodontique ;
la région de ladite gouttière orthodontique définissant ladite cavité étant appelée « région cavitaire ».

A l'étape b), le modèle tridimensionnel numérique de l'arcade de support peut être classiquement utilisé pour définir la surface intérieure de la gouttière orthodontique, en particulier pour permettre la fixation de la gouttière orthodontique sur les dents de l'arcade. Il peut être également déformé localement, au moyen d'un ordinateur, pour créer la cavité.

De manière générale, la réalisation de gouttières orthodontiques à partir de modèles d'arcades de support est bien connue de l'homme du métier.

La surface de la deuxième dent délimite partiellement la cavité, en particulier pour la fixation de l'organe. La surface de la deuxième dent s'étend cependant partiellement hors de la cavité, de manière à être en contact avec la gouttière orthodontique, et être ainsi maintenue par la gouttière orthodontique.

De préférence, la deuxième dent (qui n'est pas entièrement logée dans la cavité) est maintenue en position par la gouttière orthodontique de manière à servir d'ancrage. L'action en traction ou en compression de l'organe se traduit ainsi sensiblement exclusivement par un déplacement de la première dent (qui est entièrement logée dans la cavité, et peut donc librement se déplacer).

De préférence, la gouttière orthodontique est conformée pour maintenir en position non seulement la deuxième dent, mais également une ou de préférence plusieurs autres dents de l'arcade de support, de préférence plus de 2, plus de 5, plus de 10 autres dents. Ces autres dents participent également, avantageusement, au maintien en position de la deuxième dent, c'est-à-dire à son ancrage.

De préférence, la gouttière orthodontique est conformée pour être en contact avec plus de 10%, plus de 20%, plus de 30%, plus de 40%, de préférence plus de 50% de la surface de la deuxième dent (qui n'est pas entièrement logée dans la cavité), ce qui améliore l'action d'ancrage.

De préférence, la gouttière orthodontique est conformée pour être en contact avec moins de 90%, ou moins de 80% de la surface de la deuxième dent.

De préférence, la gouttière orthodontique a, dans la région destinée à être en contact avec la deuxième dent, une forme complémentaire à la surface de la deuxième dent. Dans la position de service, la gouttière orthodontique n'exerce de préférence aucune action tendant à déplacer la deuxième dent. Cette action se limite de préférence à une action de maintien en position pour s'opposer à l'action de l'organe de l'appareil auxiliaire, de sorte que cette action se traduit principalement par un déplacement de la première dent, entièrement logée dans la cavité.

Autrement dit, la deuxième dent est maintenue en position (c'est-à-dire maintenue immobile sur l'arcade) par la gouttière orthodontique de manière à servir d'ancrage. L'action en traction ou en compression de l'organe se traduit ainsi sensiblement exclusivement par un déplacement de la première dent.

Dans un mode de réalisation, la cavité constitue un espace de rotation pour la première dent susceptible d'y tourner de plus de 10°, de préférence de plus de 20°, de préférence de plus de 30° dans la position de service, de préférence un espace dimensionné pour que ladite première dent libre puisse effectuer ladite rotation sans être en contact avec la gouttière orthodontique ou sans qu'un tel contact n'interagisse sensiblement avec ladite rotation.

Dans un mode de réalisation, le modèle tridimensionnel numérique de la gouttière orthodontique est conformé de manière que, dans la position de service, la gouttière orthodontique modifie la position et/ou l'orientation d'au moins une troisième dent autre que les première et deuxième dents, de préférence pour corriger une malocclusion. La gouttière orthodontique peut ainsi non seulement servir à améliorer l'ancrage de la deuxième dent, mais aussi servir à corriger une malocclusion.

Dans un mode de réalisation, un procédé de fabrication selon l'invention est répété de manière à fabriquer, et de préférence remettre à l'utilisateur, un ensemble de nouvelles gouttières orthodontiques destinées à être portées successivement par l'utilisateur, en particulier pour corriger une malocclusion ou faciliter l'éruption d'une dent, de préférence sans interagir avec l'action d'un dit appareil auxiliaire, sauf pour améliorer l'ancrage de la deuxième dent.

L'invention concerne aussi un support informatique ou un ordinateur, dans lequel un modèle d'une arcade de support et un modèle d'une nouvelle gouttière orthodontique adapté à l'arcade de support sont enregistrés. Autrement dit, une gouttière orthodontique présentant la forme dudit modèle de gouttière orthodontique définit, dans une position de service avec ladite arcade de support, une cavité présentant un volume supérieur à 5 mm³.

Dans un mode de réalisation préféré, un procédé selon l'invention présente encore une ou plusieurs des caractéristiques optionnelles suivantes :
- la gouttière orthodontique est conformée de manière que, dans la position de service et dans une position d'occlusion, la surface occlusale extérieure de la région cavitaire
   - n'est pas en contact avec les dents de l'arcade dentaire antagoniste à l'arcade de support, ou
   - est en contact avec les dents de l'arcade dentaire antagoniste à l'arcade de support et est déformable sous l'effet des forces masticatoires ;
- la gouttière orthodontique présente, dans ladite région cavitaire, une surface extérieure occlusale et/ou une surface intérieure occlusale plane(s) ou présentant
   - une forme identique ou similaire à au moins une dent libre susceptible de faire éruption dans la cavité, dans une position prédéfinie de ladite dent libre, la position prédéfinie étant de préférence la position de la dent libre souhaitée à la fin de ladite éruption,
   - de préférence, une forme telle que, dans ladite position prédéfinie, aucun point de ladite dent libre ne soit écarté de plus de 1 mm, de préférence 0,5 mm de ladite une surface intérieure occlusale ;
- l'épaisseur de matière entre les surfaces extérieure et intérieure occlusales de la région cavitaire est de préférence sensiblement constante ;
- la cavité est de préférence fermée ;
- la région cavitaire présente une surface extérieure occlusale plane ;
- dans la position de service, plus de 50% de la surface des faces linguales et/ou des faces vestibulaires de la ou des dents libres sont en contact avec la surface intérieure d'intrados et/ou la surface intérieure d'extrados de la gouttière orthodontique, respectivement, de préférence sans exercer de contrainte de déplacement sur lesdites dents, de préférence en n'exerçant que des contraintes de fixation ;
- la cavité est dimensionnée pour autoriser une rotation sur elle-même d'une dent libre sortie, c'est-à-dire qui n'est pas incluse sous la surface de la gencive, autour d'un axe passant par son centre et perpendiculaire à sa face occlusale, sur un secteur angulaire supérieur à 20° ;
- la cavité présente une longueur, mesurée suivant l'axe longitudinal de la gouttière orthodontique, supérieure à 10 mm ;
- la cavité comporte un espace libre occlusal, qui s'étend entre le fond de la gouttière orthodontique et la face occlusale de la ou les dents libres qui sont logées dans la cavité, ou entre ledit fond et la gencive en l'absence de dent libre dans la cavité, ledit espace libre occlusal représentant de préférence plus de 80% du volume de la cavité.

De préférence, le procédé selon l'invention est mis en œuvre pour fabriquer un ensemble de nouvelles gouttières orthodontiques destinées à être portées successivement dans le cadre d'un traitement orthodontique, de préférence un traitement orthodontique conventionnel, de préférence un traitement orthodontique destiné à la correction d'une malocclusion. Les gouttières orthodontiques peuvent être alors des gouttières orthodontiques conventionnelles, seulement adaptées pour créer une ou plusieurs régions cavitaires.

L'invention concerne également :
- un programme d'ordinateur, comprenant des instructions de code de programme pour concevoir une nouvelle gouttière orthodontique ou un ensemble de nouvelles gouttières orthodontiques, en autonomie ou en coopération avec un opérateur, par exemple un orthodontiste, de préférence pour générer des modèles 3D de la ou desdites gouttières orthodontiques, et/ou pour commander une machine de fabrication de la ou desdites gouttières orthodontiques ;
   - un support informatique sur lequel est enregistré un tel programme, par exemple une mémoire ou un CD-ROM, et
- un ordinateur dans lequel est chargé un tel programme.

L'invention concerne également
- une nouvelle gouttière orthodontique ;
- un dit ensemble de nouvelles gouttières orthodontiques ;
- un dispositif comportant une nouvelle gouttière orthodontique et un dit appareil auxiliaire destiné à être fixé, de manière non amovible, sur une dent libre de l'arcade de support de manière que, dans la position de service, ledit appareil auxiliaire soit partiellement ou de préférence entièrement logé dans la cavité;
- un système comportant un ordinateur selon l'invention et une dite machine de fabrication desdites gouttières orthodontiques commandée par ledit ordinateur.

### Définitions

Par « **utilisateur** », on entend toute personne pour laquelle un procédé selon l'invention est mis en œuvre, que cette personne soit malade ou non.

Le terme de « **dent »** est utilisé pour désigner la couronne dentaire, c'est-à-dire la partie dentaire qui émerge de la gencive.

Un « **serrage des dents** » est une action par laquelle l'utilisateur presse sa mandibule contre son maxillaire.

La « **position de service** » est la position d'une gouttière orthodontique lorsqu'elle a été fixée sur une arcade dentaire. Classiquement, la fixation est désactivable par l'utilisateur, par une simple traction sur la gouttière.

Les directions « **verticale** » et « **horizontale** » font référence à la position de service, l'utilisateur tenant sa tête droite.

« **L'arcade de support** » est l'arcade dentaire, mandibule ou maxillaire, qui porte la nouvelle gouttière orthodontique dans la position de service.

La « **position d'occlusion** » est une position dans laquelle l'utilisateur serre les dents alors que la gouttière orthodontique est en position de service.

Un organe fixé sur l'arcade de support est dit « **amovible** » lorsqu'il peut être détaché, à la main, par l'utilisateur. Une gouttière orthodontique est amovible. Un crochet collé sur une dent n'est pas amovible.

Un « **crochet** » désigne, de manière générale, un organe fixé de manière non amovible sur une dent, classiquement collé sur une dent, et conçu pour maintenir rigidement un autre organe orthodontique, comme un arc métallique ou un élastique.

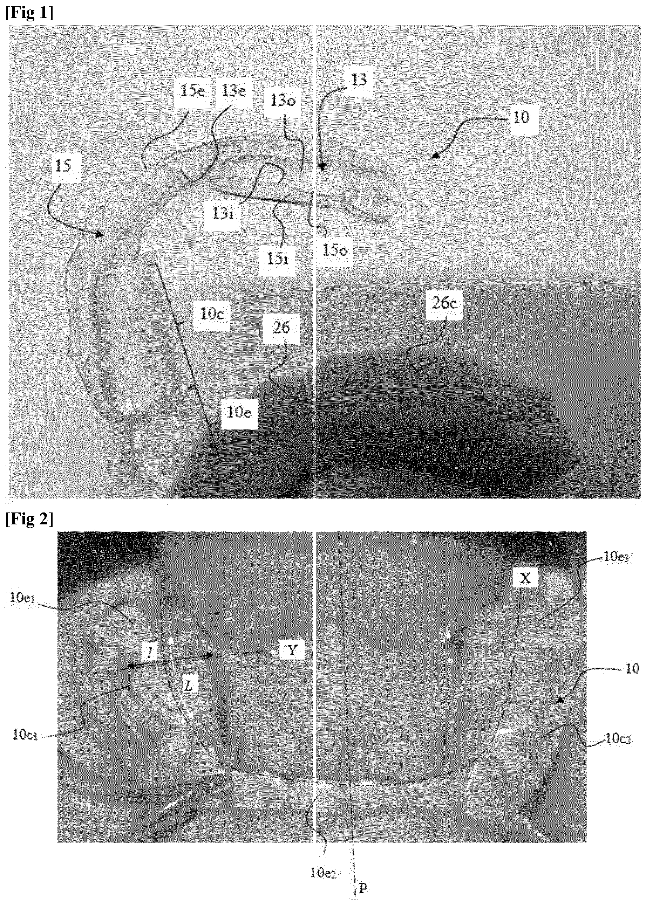

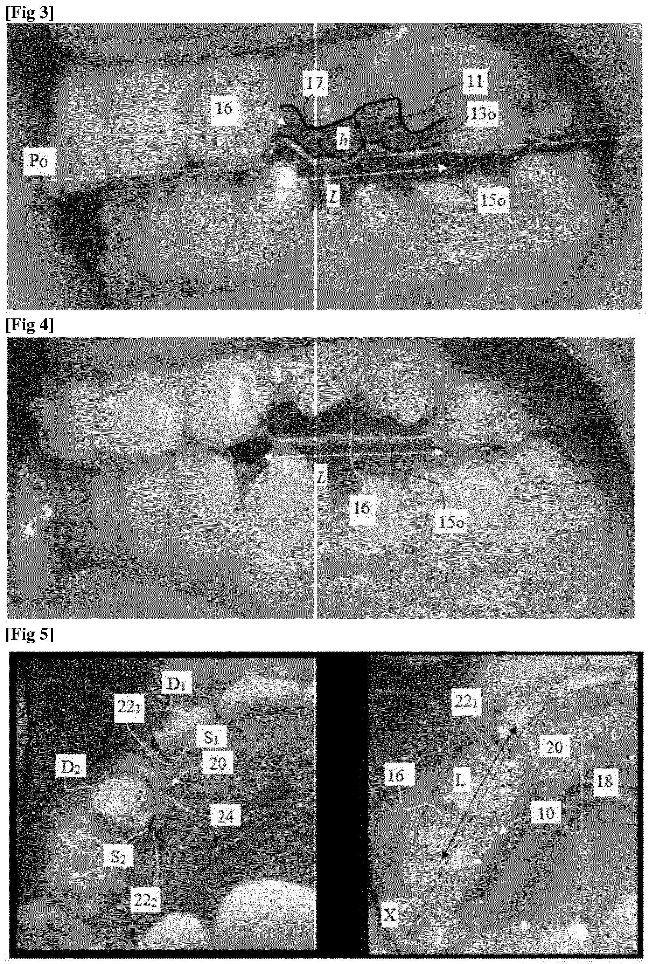

On appelle « **goulotte** », ou « **surface intérieure** », la surface de la gouttière orthodontique qui définit le renfoncement qui reçoit les dents dans la position de service. Comme illustré sur la figure 1, une gouttière orthodontique 10 définit une goulotte 13 constituée de :
- une **surface intérieure occlusale** 13o orientée vers le plan occlusal P_{O} quand l'utilisateur ferme la bouche, la figure 3 représentant cette surface en trait épais et pointillé,
- une **surface intérieure d'intrados** 13i, qui fait face aux faces linguales des dents reçues dans la goulotte, et
- d'une **surface intérieure d'extrados** 13e, qui fait face aux faces vestibulaires des dents reçues dans la goulotte.

La « **surface occlusale** » de l'arcade de support, référencée « 11 » et représentée en trait épais et continu sur la figure 3, est la surface de l'arcade de support qui fait face à la surface intérieure occlusale 13o de la gouttière orthodontique dans la position de service. Cette surface est notamment définie par les faces occlusales des dents et par la surface occlusale de la gencive qui s'étend éventuellement entre les dents, en particulier qui s'étend au-dessus des faces occlusales de dents incluses.

La distance entre un premier point de la surface occlusale de l'arcade de support et le point le plus proche de la surface intérieure occlusale 13o de la gouttière orthodontique définit la hauteur « *h* » de l'espace libre occlusal en ce premier point.

Dans un repère orthonormé (Oxyz) fixe par rapport à une dent, la dent peut réaliser, à un instant, jusqu'à six transformations élémentaires, à savoir une translation selon l'axe Ox), et/ou une translation selon l'axe Oy), et/ou une translation selon l'axe Oz), et/ou une rotation autour de l'axe Ox), et/ou une rotation autour de l'axe Oy), et/ou une rotation autour de l'axe Oz). Si toutes ces transformations élémentaires peuvent être réalisées de manière indépendante dans la position de service, la gouttière orthodontique laisse six « **degrés de liberté** ». Si deux de ces transformations élémentaires sont liées, par exemple du fait d'un appui de la dent sur la gouttière orthodontique, la gouttière orthodontique laisse cinq degrés de liberté. Si trois de ces transformations élémentaires sont liées, la gouttière orthodontique laisse quatre degrés de liberté, etc. Si une dent est totalement maintenue, elle ne dispose d'aucun degré de liberté. Si elle ne peut se mouvoir que selon une direction elle ne dispose que d'un degré de liberté, même si cette direction évolue d'un instant au suivant. Le nombre de degrés de liberté de la dent est ainsi le nombre de ces transformations élémentaires que la dent peut mettre en œuvre librement.

La « **cavité** » comporte un espace libre occlusal qui s'étend entre la surface intérieure occlusale de la goulotte et l'arcade de support, c'est-à-dire au-dessus de la mandibule ou en dessous du maxillaire sur laquelle/lequel la gouttière orthodontique est fixée. Elle peut également comporte, alternativement ou en complément de l'espace libre occlusal, de préférence en complément de l'espace libre occlusal,
- un espace libre lingual, qui s'étend entre la surface intérieure d'intrados de la goulotte et la face intérieure ou « face linguale » de la ou les dents libres qui sont logées dans la cavité ; et/ou
- un espace libre vestibulaire, qui s'étend entre la surface intérieure d'extrados de la goulotte et la face extérieure ou « face vestibulaire » de la ou les dents libres qui sont logées dans la cavité.

Une dent entièrement logée dans une cavité, ou qui, après éruption, débouchera dans une cavité de manière à y être entièrement logée, est qualifiée de « **dent libre** ». Une dent est considérée comme entièrement logée dans une cavité lorsque toute sa surface délimite ladite cavité.

Une région de la gouttière orthodontique qui définit une cavité est appelée « **région cavitaire** » 10c. Une région cavitaire est la plus petite fraction de la gouttière orthodontique comprise entre deux plans perpendiculaires à l'axe longitudinal X de la gouttière orthodontique et qui inclut complètement la cavité.

Une partie de la gouttière orthodontique 10 qui n'est pas une région cavitaire est appelée « **région enveloppante** » 10e. Une dent au moins en partie logée dans une région enveloppante est qualifiée de « **dent enveloppée ».**

La « **surface extérieure** » de la gouttière orthodontique est la surface opposée à la surface intérieure. Elle est constituée de surfaces extérieures occlusale 15o, d'intrados et d'extrados qui s'étendent en regard des surfaces intérieures occlusale 13o, d'intrados 13i, et d'extrados 13e, respectivement.

Le « **fond »** de la gouttière orthodontique est constitué de la matière qui s'étend entre les surfaces intérieure et extérieure occlusales.

Par « **modèle** », on entend un modèle tridimensionnel numérique. Un modèle est constitué d'un ensemble de voxels.

Un « **modèle de dent »** est un modèle numérique tridimensionnel d'une dent de l'arcade d'un utilisateur. Un modèle d'une arcade peut être découpé de manière à définir pour au moins une partie des dents, de préférence pour toutes les dents représentées dans le modèle de l'arcade, des modèles de dent. Les modèles de dent sont donc des modèles au sein du modèle de l'arcade.

« Comprendre », « comporter » ou « présenter » doivent être interprétés de manière large, non limitative, sauf indication contraire.

### Brève description des dessins

D'autres caractéristiques et avantages de l'invention apparaîtront encore à la lecture de la description détaillée qui va suivre et à l'examen du dessin annexé dans lequel :
- [Fig 1] la figure 1 représente un exemple de gouttière orthodontique selon l'invention ;
- [Fig 2] la figure 2 représente un exemple de nouvelle gouttière orthodontique, en position de service ;
- [Fig 3] la figure 3 représente un exemple de nouvelle gouttière orthodontique, en position de service, l'utilisateur serrant les dents ;
- [Fig 4] la figure 4 représente un autre exemple de nouvelle gouttière orthodontique, en position de service, l'utilisateur serrant les dents ;
- [Fig 5] la figure 5 représente deux photos illustrant l'utilisation d'une nouvelle gouttière orthodontique pour protéger un appareil auxiliaire ;
- [Fig 6] la figure 6 représente une autre photo deux photos illustrant l'utilisation d'une nouvelle gouttière orthodontique pour protéger un appareil auxiliaire ;
- [Fig 7] la figure 7 illustre un procédé selon l'invention.

D'autres détails et avantages de l'invention sont fournis dans la description détaillée qui va suivre, fournie à des fins illustratives et non limitatives.

### Description détaillée

### Gouttière orthodontique

Comme représenté sur la figure 1, une gouttière orthodontique 10, classiquement en un matériau polymérique, s'étend de manière à suivre les dents successives de l'arcade de support qu'elle reçoit. Selon l'invention, elle est constituée d'une ou plusieurs régions enveloppantes 10e et d'une ou plusieurs régions cavitaires 10c.

La gouttière orthodontique comporte de préférence une ou deux régions cavitaires, et/ou deux ou trois régions enveloppantes.

Sur la figure 2, la gouttière orthodontique comporte deux régions cavitaires 10c et trois régions enveloppantes 10e. De préférence, chaque région cavitaire se prolonge, de chaque côté, par une région enveloppante. Les régions enveloppantes stabilisent avantageusement la région cavitaire qu'elles encadrent.

Les régions enveloppantes 10e enserre(nt) les dents, c'est-à-dire sont en contact étroit avec elles. Elles peuvent s'en écarter légèrement, mais sans jamais laisser un espace d'un volume supérieur à 5 mm³ entre la goulotte et l'arcade de support.

Dans une région enveloppante, la gouttière orthodontique suit étroitement la forme des dents, de préférence en ne s'écartant jamais de plus de 1 mm, de préférence de plus de 0,5 mm de la surface des dents.

Dans une région enveloppante, la gouttière orthodontique peut exercer
- une contrainte de contention, c'est-à-dire de maintien en position des dents, ou
- une contrainte de déplacement pour modifier la position des dents de manière à les déplacer vers un positionnement cible, par exemple pour corriger une malocclusion, ou
- une contrainte de fixation, déterminée pour n'assurer que la fixation de la gouttière orthodontique sur les dents, sans action sur la position des dents.

De préférence, dans une région enveloppante, la surface des dents enveloppées qui est en contact avec la gouttière orthodontique représente de préférence plus de 80%, plus de 90%, de préférence sensiblement 100% de la surface desdites dents.

De préférence, les régions cavitaires sont disposées de manière symétrique par rapport au plan médian P de la gouttière orthodontique, qui se confond avec le plan sagittal dans la position de service.

La largeur *l* hors tout de la surface extérieure occlusale d'une région cavitaire, de préférence de chaque région cavitaire, est supérieure à la largeur maximale de la ou des dents libres qu'elle loge ou qui sont susceptibles d'y faire éruption. Ladite largeur, mesurée suivant une direction Y horizontale perpendiculaire à l'axe courbe, en « C », est de préférence supérieure à 5 mm, de préférence supérieure à 6 mm, et/ou inférieure à 10 mm, de préférence inférieure à 9 mm, de préférence inférieure à 8 mm.

L'épaisseur maximale du fond d'une région cavitaire, de préférence de chaque région cavitaire, est de préférence supérieure à 1 mm et/ou inférieure à 5 mm. L'épaisseur minimale du fond d'une région cavitaire, de préférence de chaque région cavitaire, est de préférence supérieure à 0,5 mm et/ou inférieure à 2 mm. La différence entre ladite épaisseur maximale et ladite épaisseur minimale est de préférence inférieure à 3 mm, de préférence inférieure à 2 mm, de préférence inférieure à 1 mm. L'épaisseur du fond de la gouttière orthodontique est de préférence sensiblement constante.

Dans un mode de réalisation préféré, l'épaisseur du fond de la goulotte dans une région cavitaire est déterminée de manière que, dans une position d'occlusion, la surface occlusale extérieure de ladite région cavitaire ne soit pas en contact avec les dents de l'arcade dentaire antagoniste à l'arcade de support. En particulier, ladite épaisseur peut être inférieure à l'épaisseur maximale du fond de la goulotte dans une région enveloppante. La région enveloppante sert ainsi de butée limitant le rapprochement des deux arcades l'une de l'autre. La cavité définie par la région cavitaire n'est alors pas affectée par les forces de mastication.

Alternativement, la gouttière orthodontique peut être conformée de manière que les forces masticatoires s'exercent sur la région cavitaire, conformée pour être déformable sous l'effet desdites forces masticatoires. Avantageusement, les dents libres soumises à ces forces peuvent donc s'orienter en conséquence, de préférence en étant guidées par la région cavitaire.

La surface extérieure occlusale et/ou la surface intérieure occlusale d'une région cavitaire, voire de toute la région cavitaire, peut être plane, comme représenté sur les figures 2, 4, 5 ou 6. Elle peut alternativement présenter une forme similaire aux dents libres, dans un agencement souhaité, comme représenté sur la figure 3. La forme des dents libres peut être déterminée par des mesures sur les dents, par exemple avec un scanner ou, si les dents ne sont pas encore sorties, à partir de clichés radiographiques. Ce mode de réalisation est particulièrement avantageux pour guider l'éruption de dents définitives et les guider jusqu' à une position cible.

Dans un mode de réalisation, dans la région cavitaire, moins de 50%, de préférence moins de 40%, de préférence moins de 30%, de préférence moins de 20%, de préférence moins de 10%, de préférence moins de 5%, de la surface intérieure occlusale, et/ou de la surface intérieure d'intrados, et/ou de la surface intérieure d'extrados est en contact avec l'arcade de support.

Dans un mode de réalisation préféré, dans une région cavitaire, dans la position de service, plus de 50%, de préférence plus de 70%, de préférence plus de 80%, de préférence plus de 90%, de préférence plus de 95% de la surface des faces linguales et/ou des faces vestibulaires des dents libres sont en contact avec la surface intérieure d'intrados et/ou la surface intérieure d'extrados, respectivement, de préférence sans exercer de contrainte de déplacement sur lesdites dents, de préférence en exerçant que des contraintes de fixation.

La région cavitaire peut être utilisée pour permettre à une dent de se déplacer naturellement. Par exemple, elle permet de protéger l'éruption naturelle d'une dent définitive.

La région cavitaire est de préférence conformée pour également guider le déplacement de la dent libre, de préférence pour ne permettre qu'un seul ou que deux degrés de liberté. Par exemple, la région cavitaire peut guider l'éruption d'une dent définitive, après la chute de la dent de lait, pour qu'elle se positionne correctement selon les courbes de Lee et de Wilson.

Une région cavitaire ménage une cavité 16 d'un volume supérieur à 5 mm³ entre la goulotte et l'arcade de support. Ce volume est de préférence supérieur à 10 mm³, de préférence supérieur à 20 mm³, de préférence supérieur à 30 mm³, de préférence supérieur à 50 mm³, de préférence supérieur à 80 mm³, de préférence supérieur à 100 mm³, de préférence supérieur à 150 mm³, voire supérieur à 200 mm³, à 250 mm³ ou à 300 mm³ et/ou inférieur à 500 mm³.

Dans un mode de réalisation, la cavité est fermée, c'est-à-dire qu'elle ne débouche pas à l'extérieur de la gouttière orthodontique. Avantageusement, le risque d'une introduction d'un aliment dans la cavité est ainsi réduit.

La cavité est de préférence conformée pour laisser au moins un degré de liberté, de préférence au moins deux, de préférence au moins trois, de préférence au moins quatre, de préférence au moins cinq, de préférence six degré de liberté, pour au moins une dent libre.

Autrement dit, dans la position de service, la cavité autorise au moins une dent libre reçue dans la cavité ou susceptible d'être reçue dans la cavité par éruption, à se mouvoir, avec au moins un, de préférence deux, de préférence trois, de préférence quatre, de préférence cinq, de préférence six degrés de liberté, sans être contrainte par la gouttière orthodontique.

Dans un mode de réalisation, la cavité est conformée pour autoriser une rotation d'au moins une dent libre sur elle-même, de préférence autour d'un axe passant par son centre et perpendiculaire à sa face occlusale, de préférence sur un secteur angulaire supérieur à 20°, de préférence supérieur à 30°, de préférence supérieur à 40°, de préférence supérieur à 50°, de préférence supérieur à 60°, et/ou inférieur à 180°.

De préférence, la cavité est cependant conformée pour limiter l'amplitude du déplacement libre d'une ou plusieurs dents libres, c'est-à-dire que la gouttière orthodontique constitue une butée qui empêche ledit déplacement au-delà d'une position de butée. En particulier, le fond de la goulotte peut servir de butée à l'éruption d'une dent.

On peut définir, pour chaque point de la surface de la région cavitaire définissant la cavité, le point d'une dent libre le plus proche. La distance entre ces deux points mesure l'écartement local entre la gouttière orthodontique et la dent libre. De préférence, la plus grande de ces distances, en considérant l'ensemble des points de la surface de la région cavitaire, ou « écartement maximal », est supérieure à 1 mm, de préférence supérieure à 2 mm, de préférence supérieure à 3 mm, de préférence supérieure à 4 mm, de préférence supérieure à 5 mm, de préférence supérieure à 6 mm, et/ou inférieure à 10 mm.

De préférence, la cavité, de préférence chaque cavité, présente une longueur L adaptée pour que, dans la position de service, elle contienne ou puisse contenir au moins une dent libre, de préférence plus de 1, de préférence plus de 2, et/ou moins de 6, de préférence moins de 5, de préférence moins de 4 dents adjacentes. La longueur d'une cavité, de préférence de chaque cavité, mesurée suivant l'axe longitudinal courbe X, en « C », de la gouttière orthodontique, est de préférence supérieure à 5 mm, de préférence supérieure à 10 mm, de préférence supérieure à 15 mm, et/ou inférieure à 30 mm, de préférence inférieure à 25 mm.

La cavité, de préférence chaque cavité comporte de préférence un espace libre occlusal 17, et optionnellement un espace libre lingual et/ou un espace libre vestibulaire.

L'espace libre occlusal représente de préférence plus de 80%, plus de 90%, plus de 95%, voire 100% de la cavité. Il s'étend entre le fond de la gouttière orthodontique et la face occlusale de la ou les dents libres qui sont logées dans la cavité, ou entre ledit fond et la gencive en l'absence de dent libre dans la cavité. La hauteur maximale et/ou la hauteur minimale de l'espace libre occlusal, mesurée(s) depuis ladite face occlusale ou depuis la gencive en l'absence de dent libre, est de préférence supérieure à 1 mm, de préférence supérieure à 2 mm, et/ou inférieure à 6 mm, de préférence inférieure à 5 mm, de préférence inférieure à 4 mm, de préférence inférieure à 3 mm.

L'espace libre lingual optionnel peut avoir une hauteur minimale et/ou une hauteur maximale, mesurée(s) à partir de la face linguale et perpendiculairement à la face linguale, supérieure à 0,1 mm, de préférence supérieure à 0,5 mm, et/ou inférieure à 2 mm.

L'espace libre vestibulaire optionnel peut avoir une hauteur minimale et/ou une hauteur maximale, mesurée(s) à partir de la face vestibulaire et perpendiculairement à la face vestibulaire des dents, supérieure à 0,1 mm, de préférence supérieure à 0,5 mm, et/ou inférieure à 2 mm.

Dans une région cavitaire, de préférence dans chaque région cavitaire, hors la zone définissant la cavité, la gouttière orthodontique peut suivre étroitement la forme des dents, par exemple en ne s' écartant jamais de plus de 1 mm, ou de plus de 0,5 mm de la surface des dents.

Dans la région cavitaire, qui définit la cavité, la gouttière orthodontique peut exercer
- une contrainte de contention, c'est-à-dire une contrainte de maintien en position des dents, et/ou
- une contrainte de déplacement pour modifier la position des dents, et/ou
- une légère pour seulement assurer la fixation de la gouttière orthodontique sur les dents, sans action sensible sur la position des dents.

De préférence, la gouttière orthodontique n'exerce pas de contrainte sur l'arcade de support dans une région cavitaire, sauf optionnellement une contrainte pour assurer la fixation de la gouttière orthodontique sur les dents, sans action sensible sur la position des dents.

### Appareil auxiliaire

Dans un mode de réalisation particulièrement avantageux, la région cavitaire et l'arcade de support ménagent ensemble une cavité suffisante pour loger, outre au moins une dent libre, de préférence au moins deux dents libres, un appareil auxiliaire reliant physiquement lesdites deux dents libres l'une à l'autre ou, de préférence, une dent libre à une dent enveloppée.

L'appareil auxiliaire peut être en particulier un appareil à arc et attache, ou un appareil à crochets et élastique. L'appareil auxiliaire peut en particulier comporter des premier et deuxième crochets fixés sur la dent libre et sur la dent enveloppée, de préférence sur les première et deuxième dents libres, respectivement, et un élastique ou une chaînette fixé aux premier et deuxième crochets. Un tel appareil auxiliaire est particulièrement efficace pour faire tourner une dent libre, à une vitesse typiquement supérieure à 20°, 30°, voire 40° par mois. Une telle vitesse est à comparer à une vitesse typiquement de 4 à 6° par mois obtenue avec des gouttières orthodontiques conventionnelles.

L'association d'une nouvelle gouttière orthodontique et d'un appareil auxiliaire, au moins en partie logé dans la cavité définie par la région cavitaire, permet de bénéficier de l'efficacité de l'appareil auxiliaire pour déplacer la ou les dents libres, tout en bénéficiant d'un maintien des autres dents par la gouttière orthodontique. La gouttière orthodontique protège également l'appareil auxiliaire.

Notamment lorsque la région cavitaire protège un appareil auxiliaire, la cavité peut s'étendre de manière à être partiellement définie par une dent enveloppée, comme sur la figure 5. Par exemple, la fraction de la surface de la dent enveloppée qui définit la cavité est utilisée afin d'y fixer un crochet. Avantageusement, la faction de cette dent qui est dans une région enveloppante peut être maintenue en position et servir de point d'ancrage immobile pour l'appareil auxiliaire.

Plus précisément, la figure 5 illustre un exemple d'un dispositif 18 selon l'invention comportant une gouttière orthodontique 10 selon l'invention et un appareil auxiliaire 20. Comme illustré sur l'image de gauche, l'appareil auxiliaire comporte des premier et deuxième crochets 22₁ et 22₂ collés sur des première et deuxième surfaces S₁ et S₂ de première et deuxième dents adjacentes D₁ et D₂ et une chainette 24 exerçant une traction élastique entre les deux crochets. Sur l'image de droite, la gouttière orthodontique 10 a été mise en position de service. La dent D₁ à faire tourner, la gencive et la fraction de la dent D₂ qui porte le deuxième crochet délimitent une cavité 16 avec la gouttière orthodontique. L'appareil auxiliaire est entièrement logé dans la cavité 16. Une fraction de la deuxième dent D₂ est dans une région enveloppante, de manière que la deuxième dent soit maintenue en position et puisse servir de point d'ancrage à la chaînette. La traction exercée par la chaînette se traduit ainsi sensiblement intégralement par une rotation de la première dent D1.

De préférence, la région cavitaire définit une cavité sensiblement close, ce qui avantageusement évite que l'utilisateur avale des pièces qui se seraient détachées de l'appareil auxiliaire.

### Procédé de fabrication

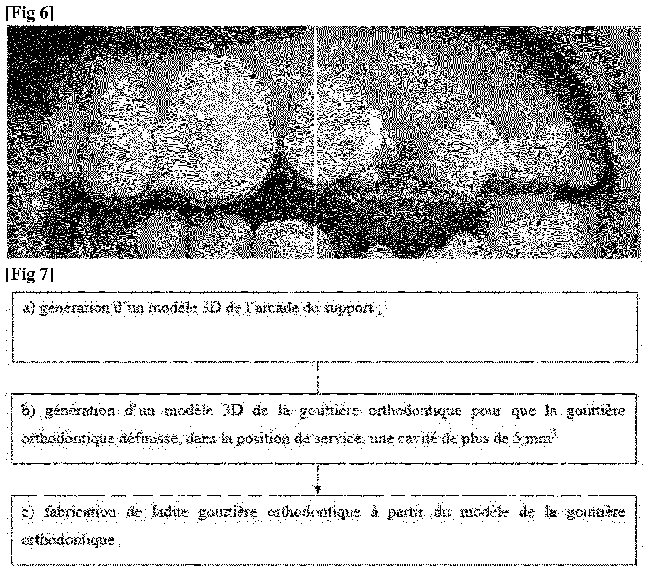

Le procédé selon l'invention est illustré sur la figure 7.

De préférence, la gouttière orthodontique est fabriquée suivant les techniques conventionnelles de fabrication de gouttières orthodontiques, c'est-à-dire à partir d'un modèle de gouttière, lui-même conçu à partir d'un modèle de l'arcade de support à laquelle la gouttière orthodontique est destinée.

Elle peut être aussi fabriquée par thermoformage d'une feuille polymérique sur un moule 26 de l'arcade de support modifié pour créer une ou plusieurs empreintes 26c de régions cavitaires, comme représenté sur la figure 1.

On décrit ci-après un exemple de procédé de fabrication dans lequel les gouttières orthodontiques sont destinées au traitement d'une malocclusion.

**A l'étape** a), on génère, classiquement en début de traitement, un modèle numérique tridimensionnel de l'arcade de support, dit « modèle initial », par exemple avec un scanner 3D. Le modèle initial représente les dents dans un agencement initial.

De préférence, le modèle de l'arcade de support est découpé en modèles des dents. Les techniques à cet effet sont bien connues.

Un opérateur, par exemple un orthodontiste, manipule ensuite les modèles de dent avec un logiciel jusqu'à obtenir un « modèle final » de l'arcade de support, représentant les dents dans un agencement « final » tel qu'anticipé pour un instant final futur marquant la fin du traitement orthodontique. Le logiciel de manipulation des modèles de dent permet également de déplacer les modèles de dent afin de déterminer une série de modèles de l'arcade de support avec des agencements intermédiaires des dents, tels qu'anticipés à des instants intermédiaires futurs respectifs, depuis l'agencement initial jusqu'à l'agencement final.

A **l'étape b),** l'opérateur peut en déduire la forme d'une série de gouttières orthodontiques correspondantes, adaptées pour modifier l'agencement des dents depuis l'agencement initial jusqu'à l'agencement final, en passant par les agencements intermédiaires. Classiquement, la première gouttière orthodontique est destinée à être portée depuis l'instant initial jusqu'au premier instant intermédiaire, la deuxième gouttière orthodontique est destinée à être portée depuis le premier instant intermédiaire jusqu'au deuxième instant intermédiaire, etc., et la dernière gouttière orthodontique est destinée à être portée depuis le dernier instant intermédiaire jusqu'à l'instant final.

**A l'étape c),** les modèles des gouttières orthodontiques sont transmis à une machine de fabrication, par exemple une imprimante 3D, pour fabriquer lesdites gouttières orthodontiques.

On remet ensuite les gouttières orthodontiques fabriquées à l'utilisateur afin qu'il les porte successivement.

Les étapes décrites ci-dessus sont conventionnelles pour fabriquer des gouttières orthodontiques. En particulier, les logiciels pour découper le modèle initial de l'arcade de support en modèles de dent, puis le déformer, par déplacement des modèles de dent, de manière à générer les modèles intermédiaires et le modèle final sont bien connus.

Selon l'invention, les modèles des gouttières orthodontiques sont déformés pour que les gouttières orthodontiques puissent créer une cavité dans la position de service. Une telle déformation ne pose pas de difficulté particulière et peut être réalisée avec tout logiciel de modification de modèles, comme Memotech (Smilers). En particulier, il est possible de simuler numériquement la position de service en disposant le modèle d'une gouttière orthodontique, par exemple conçue de manière conventionnelle, sur le modèle de l'arcade de support, puis de déplacer des points du modèle de gouttière orthodontique pour créer une cavité.

Il est aussi possible de déterminer les caractéristiques dimensionnelles de la cavité, par exemple le volume de la cavité ou l'écartement maximal avec une dent libre. Le modèle de gouttière peut être facilement modifié pour modifier ces caractéristiques dimensionnelles.

Dans un mode de réalisation, aucune modification de l'agencement des dents de l'arcade de support autres que les dents libres n'est souhaitée hors de la région de la ou des dents libres. Dans un mode de réalisation, aucune modification de l'agencement des dents de l'arcade de support n'est souhaitée, par exemple lorsque la gouttière orthodontique n'est utilisée que pour protéger une dent en cours d'éruption. Il est alors possible de concevoir un modèle d'une gouttière orthodontique présentant sensiblement la forme du modèle de l'arcade de support, puis de la déformer localement pour créer la cavité.

Comme cela apparaît clairement à présent, une nouvelle gouttière orthodontique permet, dans la position de service, de définir une cavité afin de
- laisser libre le déplacement d'une ou plusieurs dents et/ou d'un appareil auxiliaire, les parois définissant la cavité pouvant guider optionnellement et/ou de limiter l'amplitude de ce déplacement ;
- utiliser simultanément un appareil auxiliaire et des régions enveloppantes qui peuvent être similaires aux gouttières orthodontiques conventionnelles, notamment pour un ancrage sur les dents ou pour modifier la position des dents.

La nouvelle gouttière orthodontique permet en outre de protéger l'appareil auxiliaire des chocs et d'éviter que des morceaux de cet appareil ne soient avalés.

La région cavitaire peut être enfin utilisée pour maintenir écartées des dents disposées, au moins partiellement, dans des régions enveloppantes adjacentes, par exemple pour faciliter l'éruption de dents.

Bien entendu, l'invention n'est pas limitée aux modes de réalisation décrits ci-dessus et représentés.

En particulier, dans un mode de réalisation, la gouttière orthodontique est fabriquée par thermoformage au moyen d'un modèle physique de l'arcade dentaire de l'utilisateur, par exemple un modèle en plâtre ou en résine, modifié pour que la gouttière orthodontique présente au moins une région cavitaire. Les étapes a) à c) sont donc remplacées par les étapes suivantes :
a') génération d'un modèle physique de l'arcade de support ;
b') modification du modèle physique par au moins un ajout de matière adapté à la création d'une région cavitaire dans la gouttière orthodontique fabriquée à l'étape c') suivante ;
c') fabrication de la gouttière orthodontique par thermoformage sur le modèle physique modifié obtenu à l'étape b').

Toutes les caractéristiques décrites ci-dessus sont applicables à ce mode de réalisation, sauf incompatibilité technique. Le thermoformage est une technique bien connue dans le domaine de l'orthodontie.

## Revendications

1. Procédé de fabrication d'au moins une gouttière orthodontique destinée à être portée, dans une position de service, par une arcade dentaire d'un utilisateur, dite « arcade de support », l'arcade de support comportant une première dent (D₁) et une deuxième dent (D₂) et portant ou étant destinée à porter un appareil auxiliaire (20) comportant un organe (24) reliant une première surface de la première dent (D₁) à une deuxième surface de la deuxième dent (D₂), le procédé comportant les étapes suivantes :
a) génération d'un modèle tridimensionnel numérique de l'arcade de support ;
b) à partir du modèle tridimensionnel numérique de l'arcade de support, génération d'un modèle tridimensionnel numérique de la gouttière orthodontique conformé de manière que
- ladite gouttière orthodontique puisse être fixée, de manière amovible, sur l'arcade de support, dans une position de service,
- ladite gouttière orthodontique définisse, dans la position de service, avec l'arcade de support, une cavité (16) conformée pour loger l'appareil auxiliaire (20), lesdites première et deuxième surfaces appartenant à la surface de l'arcade de support définissant, avec ladite gouttière orthodontique, ladite cavité (16), seule la première dent, parmi les première et deuxième dents, étant entièrement logée dans la cavité, et
c) fabrication de ladite gouttière orthodontique à partir du modèle de la gouttière orthodontique ;
la région de ladite gouttière orthodontique définissant ladite cavité étant appelée « région cavitaire ».

2. Procédé selon la revendication précédente, dans lequel :
à l'étape a), on génère un modèle tridimensionnel numérique de l'appareil auxiliaire (20) ;
à l'étape b), on positionne le modèle de l'appareil auxiliaire sur le modèle de l'arcade de support, puis on génère le modèle tridimensionnel numérique de la gouttière orthodontique en utilisant le modèle de l'arcade de support sur lequel le modèle de l'appareil auxiliaire a été positionné.

3. Procédé selon l'une quelconque des revendications précédentes, dans lequel le modèle tridimensionnel numérique de la gouttière orthodontique est conformé de manière que, dans la position de service, la deuxième dent soit maintenue en position par la gouttière orthodontique.

4. Procédé selon l'une quelconque des revendications précédentes, dans lequel le modèle tridimensionnel numérique de la gouttière orthodontique est conformé de manière que, dans la position de service, la gouttière orthodontique ne soit pas en contact avec la première dent et soit en contact avec plus de 10% de la surface de la deuxième dent.

5. Procédé selon l'une quelconque des revendications précédentes, dans lequel la cavité autorise une rotation sur elle-même de la première dent, autour d'un axe passant par son centre et perpendiculaire à sa face occlusale, sur un secteur angulaire supérieur à 20°.

6. Procédé selon l'une quelconque des revendications précédentes, dans lequel la cavité présente une longueur (L), mesurée suivant l'axe longitudinal (X) de la gouttière orthodontique, supérieure à 10 mm.

7. Procédé selon l'une quelconque des revendications précédentes, dans lequel
- l'appareil auxiliaire comporte des premier et deuxième crochets destinés à être rigidement fixés sur les première et deuxième surfaces et auxquels l'organe est fixé, ou
dans lequel
- l'organe est un fil collé sur les première et deuxième surfaces,
l'organe étant conçu de manière à exercer une tension entre lesdits premier et deuxième crochets.

8. Procédé selon l'une quelconque des revendications précédentes, dans lequel ladite gouttière orthodontique est conformée de manière que ladite cavité (16) présente un volume supérieur à 80 mm³.

9. Procédé selon l'une quelconque des revendications précédentes, dans lequel le modèle tridimensionnel numérique de la gouttière orthodontique est conformé de manière que, dans la position de service, la gouttière orthodontique modifie la position et/ou l'orientation d'au moins une troisième dent autre que les première et deuxième dents.

10. Procédé selon l'une quelconque des revendications précédentes, dans lequel la cavité comporte un espace libre occlusal (17) s'étendant, entre la surface intérieure occlusale (13o) de la gouttière orthodontique et la surface occlusale (11) de l'arcade de support, l'appareil auxiliaire étant logé dans l'espace libre occlusal (17).

11. Procédé selon l'une quelconque des revendications précédentes, dans lequel la gouttière orthodontique est conformée de manière que, dans la position de service et dans une position d'occlusion, la surface occlusale extérieure (15o) de la région cavitaire (10c)
- n'est pas en contact avec les dents de l'arcade dentaire antagoniste à l'arcade de support, ou
- est en contact avec les dents de l'arcade dentaire antagoniste à l'arcade de support et est déformable sous l'effet des forces masticatoires.

12. Procédé selon l'une quelconque des revendications précédentes, dans lequel la gouttière orthodontique est conformée de manière à guider l'éruption d'au moins une dent, la gouttière orthodontique présentant, dans ladite région cavitaire (10c), une surface intérieure occlusale plane(s) ou présentant une forme telle que, dans une position prédéfinie de ladite dent, aucun point de ladite dent ne soit écarté de plus de 1 mm de ladite surface intérieure occlusale.

13. Procédé selon l'une quelconque des revendications précédentes, dans lequel la cavité est fermée et/ou dans lequel la région cavitaire (10c) présente une surface extérieure occlusale (15o) plane.

14. Procédé selon l'une quelconque des revendications précédentes, mis en œuvre pour fabriquer une pluralité de gouttières orthodontiques destinées à être portées successivement dans le cadre d'un traitement orthodontique de malocclusion.

## Patentansprüche

1. Verfahren zur Herstellung mindestens einer kieferorthopädischen Schiene, die dazu bestimmt ist, in einer Betriebsposition von einem Zahnbogen eines Benutzers, "Stützbogen" genannt, getragen zu werden, wobei der Stützbogen einen ersten Zahn (D₁) und einen zweiten Zahn (D₂) umfasst und eine Hilfseinrichtung (20) trägt oder zu tragen bestimmt ist, die ein Element (24) umfasst, das eine erste Fläche des ersten Zahns (D₁) mit einer zweiten Fläche des zweiten Zahns (D₂) verbindet, wobei das Verfahren die folgenden Schritte umfasst:
a) Erzeugen eines digitalen dreidimensionalen Modells des Stützbogens;
b) ausgehend von dem digitalen dreidimensionalen Modell des Stützbogens, Erzeugen eines digitalen dreidimensionalen Modells der kieferorthopädischen Schiene, das so ausgebildet ist, dass
- die kieferorthopädische Schiene abnehmbar auf dem Stützbogen in einer Betriebsposition befestigt werden kann,
- die kieferorthopädische Schiene in der Betriebsposition mit dem Stützbogen eine Kavität (16) definiert, die dazu ausgebildet ist, die Hilfseinrichtung (20) aufzunehmen, wobei die zu der Fläche des Stützbogens gehörenden ersten und zweiten Flächen mit der kieferorthopädischen Schiene die Kavität (16) definieren, wobei nur der ersten Zahn unter den ersten und zweiten Zähnen vollständig in der Kavität aufgenommen ist, und
c) Herstellen der kieferorthopädischen Schiene ausgehend von dem Modell der kieferorthopädischen Schiene;
wobei der Bereich der kieferorthopädischen Schiene, der die Kavität definiert, als "kavitärer Bereich" bezeichnet wird.

2. Verfahren nach dem vorhergehenden Anspruch, wobei:
im Schritt a) ein digitales dreidimensionales Modell der Hilfseinrichtung (20) erzeugt wird;
im Schritt b) das Modell der Hilfseinrichtung auf dem Modell des Stützbogens positioniert wird, dann das digitale dreidimensionale Modell der kieferorthopädischen Schiene unter Verwendung des Modells des Stützbogens erzeugt wird, auf dem das Modell der Hilfseinrichtung positioniert worden ist.

3. Verfahren nach einem der vorhergehenden Ansprüche, wobei das digitale dreidimensionale Modell der kieferorthopädischen Schiene so ausgebildet ist, dass in der Betriebsposition der zweite Zahn durch die kieferorthopädische Schiene in Position gehalten wird.

4. Verfahren nach einem der vorhergehenden Ansprüche, wobei das digitale dreidimensionale Modell der kieferorthopädischen Schiene so ausgebildet ist, dass in der Betriebsposition die kieferorthopädische Schiene nicht in Kontakt mit dem ersten Zahn ist und in Kontakt mit mehr als 10 % der Fläche des zweiten Zahns ist.

5. Verfahren nach einem der vorhergehenden Ansprüche, wobei die Kavität eine Rotation des ersten Zahns um sich selbst um eine durch sein Zentrum und senkrecht zu seiner okklusalen Seite verlaufenden Achse über einen Winkelsektor von mehr als 20° zulässt.

6. Verfahren nach einem der vorhergehenden Ansprüche, wobei die Kavität eine entlang der Längsachse (X) der kieferorthopädischen Schiene gemessene Länge (L) von mehr als 10 mm aufweist.

7. Verfahren nach einem der vorhergehenden Ansprüche, wobei
- die Hilfseinrichtung erste und zweite Haken umfasst, die dazu bestimmt sind, starr an den ersten und zweiten Flächen befestigt werden, und an denen das Element befestigt ist, oder
wobei
- das Element ein Draht ist, der auf die ersten und zweiten Flächen geklebt wird,
wobei das Element so ausgelegt ist, dass es eine Zugkraft zwischen den ersten und zweiten Haken ausübt.

8. Verfahren nach einem der vorhergehenden Ansprüche, wobei die kieferorthopädische Schiene so ausgebildet ist, dass die Kavität (16) ein Volumen von mehr als 80 mm³ aufweist.

9. Verfahren nach einem der vorhergehenden Ansprüche, wobei das digitale dreidimensionale Modell der kieferorthopädischen Schiene so ausgebildet ist, dass die kieferorthopädische Schiene in der Betriebsposition die Position und/oder die Ausrichtung mindestens eines dritten Zahns, der nicht der erste und zweite Zahn ist, ändert.

10. Verfahren nach einem der vorhergehenden Ansprüche, wobei die Kavität einen okklusalen freien Raum (17) umfasst, der sich zwischen der okklusalen inneren Fläche (13o) der kieferorthopädischen Schiene und der okklusalen Fläche (11) des Stützbogens erstreckt, wobei die Hilfseinrichtung in dem okklusalen freien Raum (17) aufgenommen ist.

11. Verfahren nach einem der vorhergehenden Ansprüche, wobei die kieferorthopädische Schiene so ausgebildet ist, dass in der Betriebsposition und in einer Okklusionsposition die okklusale äußere Fläche (15o) des kavitären Bereichs (10c)
- nicht in Kontakt mit den Zähnen des Zahnbogens ist, der der Antagonist zu dem Stützbogen ist, oder
- in Kontakt mit den Zähnen des Zahnbogens ist, der der Antagonist zu dem Stützbogen ist, und unter der Wirkung der Kaukräfte verformbar ist.

12. Verfahren nach einem der vorhergehenden Ansprüche, wobei die kieferorthopädische Schiene so ausgebildet ist, dass sie die Eruption mindestens eines Zahns führt, wobei die kieferorthopädische Schiene in dem kavitären Bereich (10c) eine okklusale innere Fläche aufweist, die plan ist oder eine solche Form aufweist, dass in einer vordefinierten Position des Zahns kein Punkt des Zahns um mehr als 1 mm von der okklusalen inneren Fläche beabstandet ist.

13. Verfahren nach einem der vorhergehenden Ansprüche, wobei die Kavität geschlossen ist und/oder wobei der kavitäre Bereich (10c) eine plane okklusale äußere Fläche (15o) aufweist.

14. Verfahren nach einem der vorhergehenden Ansprüche, das eingesetzt wird, um eine Mehrzahl von kieferorthopädischen Schienen herzustellen, die dazu bestimmt sind, im Rahmen einer kieferorthopädischen Malokklusionsbehandlung nacheinander getragen zu werden.

## Claims

1. Method for manufacturing at least one orthodontic aligner intended to be carried, in a position of use, by a user's dental arch, referred to as a "supporting arch", the supporting arch comprising a first tooth (D₁) and a second tooth (D₂) and carrying or being intended to carry an auxiliary device (20) comprising a member (24) connecting a first surface of the first tooth (D₁) to a second surface of the second tooth (D₂), the method comprising the following steps:
a) generating a digital three-dimensional model of the supporting arch;
b) from the digital three-dimensional model of the supporting arch, generating a digital three-dimensional model of the orthodontic aligner configured such that
- said orthodontic aligner can be fixed, in a removable manner, to the supporting arch, in a position of use,
- said orthodontic aligner, in the position of use, defines, with the supporting arch, a cavity (16) configured to accommodate the auxiliary device (20), said first and second surfaces belonging to the surface of the supporting arch defining, with said orthodontic aligner, said cavity (16), only the first tooth, from the first and second teeth, being accommodated entirely in the cavity, and
c) manufacturing said orthodontic aligner from the model of the orthodontic aligner;
the region of said orthodontic aligner defining said cavity being referred to as the "cavity region".

2. Method according to the preceding claim, wherein:
in step a), a digital three-dimensional model of the auxiliary device (20) is generated;
in step b), the model of the auxiliary device is positioned on the model of the supporting arch, and then the digital three-dimensional model of the orthodontic aligner is generated using the model of the supporting arch on which the model of the auxiliary device was positioned.

3. Method according to either of the preceding claims, wherein the digital three-dimensional model of the orthodontic aligner is configured such that, in the position of use, the second tooth is held in position by the orthodontic aligner.

4. Method according to any one of the preceding claims, wherein the digital three-dimensional model of the orthodontic aligner is configured such that, in the position of use, the orthodontic aligner is not in contact with the first tooth and is in contact with more than 10% of the surface of the second tooth.

5. Method according to any one of the preceding claims, wherein the cavity allows the first tooth to rotate on itself, about an axis that passes through its center and is perpendicular to its occlusal face, over an angular sector of greater than 20°.

6. Method according to any one of the preceding claims, wherein the cavity has a length (L), measured along the longitudinal axis (X) of the orthodontic aligner, of greater than 10 mm.

7. Method according to any one of the preceding claims, wherein
- the auxiliary device comprises first and second hooks which are intended to be rigidly fixed to the first and second surfaces and to which the member is fixed, or wherein
- the member is a wire adhesively bonded to the first and second surfaces,
the member being designed so as to exert a tension between said first and second hooks.

8. Method according to any one of the preceding claims, wherein said orthodontic aligner is shaped such that said cavity (16) has a volume greater than 80 mm³.

9. Method according to any one of the preceding claims, wherein the digital three-dimensional model of the orthodontic aligner is shaped such that, in the position of use, the orthodontic aligner modifies the position and/or the orientation of at least a third tooth other than the first and second teeth.

10. Method according to any one of the preceding claims, wherein the cavity comprises an occlusal free space (17) extending between the occlusal inner surface (13o) of the orthodontic aligner and the occlusal surface (11) of the supporting arch, the auxiliary device being accommodated in the occlusal free space (17).

11. Method according to any one of the preceding claims, wherein the orthodontic aligner is configured in such a way that, in the position of use and in an occlusion position, the outer occlusal surface (15o) of the cavity region (10c)
- is not in contact with the teeth of the dental arch antagonist to the supporting arch, or
- is in contact with the teeth of the dental arch antagonist to the supporting arch and is deformable under the effect of the masticatory forces.

12. Method according to any one of the preceding claims, wherein the orthodontic aligner is configured in such a way as to guide the eruption of at least one tooth, the orthodontic aligner having, in said cavity region (10c), a plane occlusal inner surface or having a shape such that, in a predefined position of said tooth, no point of said tooth is spaced apart by more than 1 mm from said occlusal inner surface.

13. Method according to any one of the preceding claims, wherein the cavity is closed and/or wherein the cavity region (10c) has a plane occlusal outer surface (15o).

14. Method according to any one of the preceding claims, implemented to manufacture a plurality of orthodontic aligners intended to be worn successively in the context of orthodontic treatment of a malocclusion.
